# EUROPEAN PATENT SPECIFICATION

(11) **EP 3 172 065 B1**
(45) Date of publication and mention of the grant of the patent: **29.11.2017**
(21) Application number: 15760258.2
(22) Date of filing: 21.07.2015
(51) Int. Cl.: B60C 19/00, B60C 5/00

(54) **TYRE COMPRISING A FOAM MATERIAL FOR SOUND ABSORPTION**
REIFEN MIT EINEM SCHAUMSTOFF ZUR SCHALLABSORPTION
PNEUMATIQUE COMPRENANT UN MATÉRIAU ALVÉOLAIRE POUR L'INSONORISATION

(30) Priority: 21.07.2014 IT RM20140405
(43) Date of publication of application: 31.05.2017
(73) Proprietor: Bridgestone Corporation, Tokyo 104-8340 (JP)
(72) Inventor: AGORETTI, Pasquale, 00040 Ariccia (IT); BARTOLONI, Alessandra, 00133 Roma (IT); AMURRI, Michele, 00122 Roma (IT); HOUSE, John, 00128 Roma (IT)
(74) Representative: Marchetti, Alessio
(86) International application number: PCT/IB2015/055524
(87) International publication number: WO 2016/012945

(56) References cited:
- EP-A1- 1 800 900
- EP-A1- 2 397 347
- EP-A2- 1 253 025
- DE-A1-102008 036 108
- US-A1- 2011 030 866
- US-A1- 2011 168 313
- US-A1- 2012 325 383
- WEI YANG ET AL: "REVIEW ON AUXETIC MATERIALS", JOURNAL OF MATERIALS SCIENCE, vol. 39, 2004, pages 3269-3279, XP002738011,

## Description

### TECHNICAL FIELD

The present invention relates to a tyre comprising a foam material for sound absorption. More precisely, the present invention relates to a tyre comprising a foam material with auxetic characteristics housed in the inner cavity that, in service, is filled with air under pressure.

### BACKGROUND ART

One of the noises produced by a tyre in service regards the resonance cavity sound generated by vibration of the air under pressure inside its inner cavity. To reduce this type of noise, the use of a porous material applied to the air-impermeable layer of the tyre's inner cavity in a manner such that the resonance cavity sound is absorbed by the porous material has long been known. The porous material most commonly used for this purpose is polyurethane.

Despite being able to achieve the required sound absorption, the foam materials used up until now still suffer from a decrease in their sound absorption capacity during operation of the tyre and in particular with the increase in its speed of rotation. In fact, during operation of the tyre, the foam material housed in the inner cavity is subjected to a compression action that, necessarily, entails a decrease in its porosity. As will be
immediately evident to a person skilled in the field, this effect necessarily results in a drop in the sound absorption capability of the material. Obviously, the greater the running speed of the tyre, the greater will be its drop in terms of sound absorption.

In other words, the faster the vehicle travels, the less will be the sound damping effect of the porous materials inserted in the tyres and, in consequence, the greater will be the resonance noise coming from them.

The need was thus felt to have a foam material the technical specifications of which are such as to avoid its performance dropping in terms of sound absorption as the speed of rotation of the tyre increases.

EP1800900A1 and DE102008036108A1 disclose the use of auxetic material in tyres essentially for mechanically reinforcing the tyre tread area.

### DISCLOSURE OF INVENTION

The subject of the present invention is a tyre comprising an impermeable layer suitable to ensure the sealing under pressure of the air contained in the inner cavity of the carcass and a foam material housed inside said cavity and suitable to provide sound absorption; said tyre being characterized in that said foam material is an auxetic material.

Preferably, said foam material has a Poisson's ratio of less than zero.

Preferably, said foam material has a density ranging from 0.01 g/cm³ to 0.15 g/cm³.

Preferably, said foam material is housed on the surface of the impermeable layer of the inner cavity of the tyre.

Preferably, said foam material occupies a volume ranging from 0.1% to 100% of the volume of the inner cavity. More preferably, said foam material has a thickness ranging from 10mm to 200mm and a width ranging from 10% to 100% of the width of the inner cavity.

Preferably, said foam material occupies a volume ranging from 0.4% to 20% of the volume of the inner cavity. More preferably, said foam material has a thickness ranging from 20 to 30mm and a width ranging from 20% to 40% of the width of the inner cavity.

Preferably, said foam material is housed in the cavity in the form of a toroid, or in the form of a strip with a length equal to that of the impermeable layer, or in the form of single segments assembled so as to cover the entire length of the impermeable layer.

### BEST MODE FOR CARRYING OUT THE INVENTION

An embodiment is described below by way of non-limitative example.

The applicant has performed a comparison in terms of sound absorption between a polyurethane-based foam material normally used in tyres and the same material after being subjected to a mechanical/thermal treatment necessary to give it auxetic characteristics.

The sound absorption tests were performed on the two materials both in their 'rest' state and in their compression state, compression being applied to simulate the response of the porous material of the tyre in service.

The polyurethane-based foam material used has an apparent density of 0.025 g/cm³, a compression strength of 1.1 kPa and a tensile strength of 100 kPa with 500% elongation at break.

The procedure used for making the polyurethane foam material auxetic according to one of the methods described in the literature is described below, solely by way of example.

A sample of foam material with dimensions of 135 mm x 135 mm x 27 mm was compressed in a mould with dimensions of 100 mm x 100 mm x 20 mm (approximately 25% compression along each axis) and heated to a temperature of 200°C for 10 minutes. After this period of heating, the sample was removed from the mould, stretched and reinserted in the mould where it was cooled to ambient temperature. At this point, the sample was heated again to 100°C for one hour.

The sound absorption tests were performed according to the ISO 10534-2 Standard at a frequency ranging from 200 to 2000 Hz.

As anticipated above, comparative sound absorption tests were performed. In particular, four sound absorption tests were performed: (i) on untreated foam material (material A), (ii) on untreated foam material subjected to compression comparable to that of operation (material Ac), (iii) on treated foam material (material B), and (iv) on treated foam material subjected to compression comparable to that of operation (material Bc).

The values obtained were indexed to the value obtained for material A and are listed in Table I.

**TABLE I**

| | |
|---|---|
| Material A | 100 |
| Material Ac | 90 |
| Material B | 100 |
| Material Bc | 110 |

From the results obtained for the non-auxetic foam material (A and Ac), it can be concluded that the sound absorption capabilities of this material decrease when subjected to compression. Inversely, from the results obtained for foam material with auxetic characteristics, it can be concluded that when the foam material is subjected to compression, its sound absorption capabilities not only do not drop, but increase. Therefore, the evidence of the experimental tests performed unexpectedly show that the use of foam material with auxetic characteristics ensures that resonance noise damping not only does not drop with increasing tyre speeds, but actually increases.

## Claims

1. A tyre comprising an impermeable layer suitable to ensure the sealing under pressure of the air contained in the inner cavity of the carcass and a foam material housed inside said cavity and suitable to provide sound absorption; said tyre being **characterized in that** said foam material is an auxetic material.

2. A tyre according to claim 1, **characterized in that** said foam material has a Poisson's ratio of less than zero.

3. A tyre according to claim 1 or 2, **characterized in that** said foam material has a density ranging from 0.01 g/cm3 to 0.15 g/cm³.

4. A tyre according to any of the previous claims, **characterized in that** said foam material is housed on the surface of the impermeable layer of the inner cavity of said tyre.

5. A tyre according to any of the previous claims, **characterized in that** said foam material occupies a volume ranging from 0.1% to 100% of the volume of the inner cavity.

6. A tyre according to claim 5, **characterized in that** said foam material has a thickness ranging from 10mm to 200mm and a width ranging from 10% to 100% of the width of the inner cavity.

7. A tyre according to any of the previous claims, **characterized in that** said foam material occupies a volume ranging from 0.4% to 20% of the volume of the inner cavity.

8. A tyre according to claim 7, **characterized in that** said foam material has a thickness ranging from 20mm to 30mm and a width ranging from 20% to 40% of the width of the inner cavity.

9. A tyre according to any of the previous claims, **characterized in that** said foam material is housed in the cavity in the form of a toroid, or in the form of a strip with a length equal to that of the impermeable layer, or in the form of single segments assembled so as to cover the entire length of the impermeable layer.

## Patentansprüche

1. Reifen, umfassend eine undurchlässige Schicht, geeignet, um die Versiegelung unter Druck der in dem inneren Hohlraum der Karkasse enthaltenen Luft und eines im Inneren des Hohlraums untergebrachten Schaumstoffs zu gewährleisten, und geeignet, um Schallabsorption bereitzustellen; wobei der Reifen **dadurch gekennzeichnet ist, dass** das Schaumstoffmaterial ein auxetisches Material ist.

2. Reifen nach Anspruch 1, **dadurch gekennzeichnet, dass** das Schaumstoffmaterial eine Poissonzahl von weniger als null aufweist.

3. Reifen nach Anspruch 1 oder 2, **dadurch gekennzeichnet, dass** das Schaumstoffmaterial eine Dichte im Bereich von 10 kg/m³ bis 150 kg/m³ (von 0,01 g/cm3 bis 0,15 g/cm³) aufweist.

4. Reifen nach einem der vorstehenden Ansprüche, **dadurch gekennzeichnet, dass** das Schaumstoffmaterial auf der Oberfläche der undurchlässigen Schicht des inneren Hohlraums des Reifens untergebracht ist.

5. Reifen nach einem der vorstehenden Ansprüche, **dadurch gekennzeichnet, dass** das Schaumstoffmaterial ein Volumen im Bereich von 0,1 % bis 100 % des Volumens des inneren Hohlraums einnimmt.

6. Reifen nach Anspruch 5, **dadurch gekennzeichnet, dass** das Schaumstoffmaterial eine Dicke im Bereich von 10 mm bis 200 mm und eine Breite im Bereich von 10 % bis 100 % der Breite des inneren Hohlraums aufweist.

7. Reifen nach einem der vorstehenden Ansprüche, **dadurch gekennzeichnet, dass** das Schaumstoffmaterial ein Volumen im Bereich von 0,4 % bis 20 % des Volumens des inneren Hohlraums einnimmt.

8. Reifen nach Anspruch 7, **dadurch gekennzeichnet, dass** das Schaumstoffmaterial eine Dicke im Bereich von 20 mm bis 30 mm und eine Breite im Bereich von 20 % bis 40 % der Breite des inneren Hohlraums aufweist.

9. Reifen nach einem der vorstehenden Ansprüche, **dadurch gekennzeichnet, dass** das Schaumstoffmaterial in dem Hohlraum in der Form eines Toroids oder in der Form eines Streifens mit einer Länge gleich der der undurchlässigen Schicht, oder in der Form einzelner Segmente, derart zusammengesetzt, um die gesamte Länge der undurchlässigen Schicht zu bedecken, untergebracht ist.

## Revendications

1. Pneumatique comprenant une couche imperméable appropriée pour garantir l'étanchéité sous pression de l'air contenu dans la cavité interne de la carcasse et un matériau en mousse logé à l'intérieur de ladite cavité et approprié pour fournir une isolation phonique ; ledit pneumatique étant **caractérisé en ce que** ledit matériau en mousse est un matériau auxétique.

2. Pneumatique selon la revendication 1, **caractérisé en ce que** ledit matériau en mousse a un coefficient de Poisson inférieur à zéro.

3. Pneumatique selon la revendication 1 ou 2, **caractérisé en ce que** ledit matériau en mousse a une masse volumique allant de 10 kg/m³ à 150 kg/m³ (de 0,01 g/cm3 à 0,15 g/cm³).

4. Pneumatique selon l'une quelconque des revendications précédentes, **caractérisé en ce que** ledit matériau en mousse est logé sur la surface de la couche imperméable de la cavité interne dudit pneumatique.

5. Pneumatique selon l'une quelconque des revendications précédentes, **caractérisé en ce que** ledit matériau en mousse occupe un volume allant de 0,1 % à 100 % du volume de la cavité interne.

6. Pneumatique selon la revendication 5, **caractérisé en ce que** ledit matériau en mousse a une épaisseur allant de 10 mm à 200 mm et une largeur allant de 10 % à 100 % de la largeur de la cavité interne.

7. Pneumatique selon l'une quelconque des revendications précédentes, **caractérisé en ce que** ledit matériau en mousse occupe un volume allant de 0,4 % à 20 % du volume de la cavité interne.

8. Pneumatique selon la revendication 7, **caractérisé en ce que** ledit matériau en mousse a une épaisseur allant de 20 mm à 30 mm et une largeur allant de 20 % à 40 % de la largeur de la cavité interne.

9. Pneumatique selon l'une quelconque des revendications précédentes, **caractérisé en ce que** ledit matériau en mousse est logé dans la cavité sous la forme d'un tore, ou sous la forme d'une bande avec une longueur égale à celle de la couche imperméable, ou sous la forme de segments uniques assemblés de façon à couvrir la longueur entière de la couche imperméable.
